Europäisches Patentamt

(19) European Patent Office

Office européen des brevets

(11) Publication number: **0 088 843**
**A1**

## (12) EUROPEAN PATENT APPLICATION

(21) Application number: 82301352.9

(22) Date of filing: 16.03.82

(51) Int. Cl.³: **B 23 P 19/04**
**B 23 P 21/00**

(43) Date of publication of application:
21.09.83 Bulletin 83/38

(84) Designated Contracting States:
DE FR GB NL

(71) Applicant: **POLAROID CORPORATION**
549 Technology Square
Cambridge, Massachusetts 02139(US)

(72) Inventor: **Downey, Rogers B.**
6 Berwick Road
Lexington Massachusetts 02173(US)

(74) Representative: **Abbott, Leonard Charles et al,**
GILL JENNINGS & EVERY 53-64 Chancery Lane
London WC2A 1HN(GB)

(54) Assembly machine and mechanical control therefor.

(57) A machine having a multiplicity of work stations (WS — 1A, 2A, 3A) for performing a series of sequential operations on a work piece has similar operations at the work stations grouped together (by common linkages 66, 68, 70, etc.), the motions required by each group to perform operations being provided by a single motion-generating cam (52, etc.), there being only one cam for each group of operations.

FIG. 2

Polaroid Corporation                    GJE/3082/32

-1-

ASSEMBLY MACHINE AND MECHANICAL CONTROL THEREFOR

BACKGROUND OF THE INVENTION

1. Field of the Invention

The present invention relates to multi-workstation machines for automatically performing a series of sequential operations on a workpiece at each workstation.

2. Description of the Prior Art

For the rapid assembly of articles of manufacture it is well-known to provide automated assembly machines having a multiplicity of workstations in each of which sequential assembly operations are performed on said article. Such assembly machines may move the article from workstation to workstation as part of the assembly process.

Workstations in prior art assembly machines tend to be bulky in that each station has its own motion-generating apparatus or set of cams in close proximity to provide access to the motion generated by these cams. The cams are usually driven by a common driving force such as an electric motor. Some assembly machines utilize clusters of cams at each workstation with several drive motors and with means for compensating for any unacceptable difference in rotational speed between the motors.

In these prior art machines it is normal design practice to add an additional cam to any workstation whenever a motion required is not available from cams already present at the workstation. Often, the addition of a cam to a workstation provided with cams having different motion-generating surfaces necessitates changing the cam shaft position of one or more of the other cams because of the incompatibility of the motions generated by the other cams and the added cam.

SUMMARY OF THE INVENTION

In accordance with the present invention a machine having a plurality of workstations each performing a series of operations on a workpiece, employs a plurality of master cams for providing the mechanical motions necessary to perform the operations on the workpiece. This is accomplished, in part, by grouping all of the required motions needed to perform any particular operation into one group with one cam for each group. Every such cam has a predetermined motion-generating surface and is preferably in a fixed position with respect to a common drive shaft. By utilizing a cam for a group of operations at several workstations, the number of cams required for each workstation is reduced as is the average workstation size.  In addition, before assembly machine design is initiated, the machine designer is aware that the motion generated by the cam for each group of operations is unalterably predetermined and, therefore, the potential problem of incompatibility between repositioned workstation cams is avoided.

BRIEF DESCRIPTION OF THE DRAWINGS

Fig. 1    is a schematic diagram of an assembly machine with a multiplicity of cluster-cam workstations in accordance with the prior art.

Fig. 2    is a schematic diagram of a three master cam assembly machine with a multiplicity of workstations in accordance with a preferred embodiment.

Fig. 3    depicts a workpiece assembly operation at a workstation of an assembly machine according to the preferred embodiment.

Fig. 4    depicts the times of occurrence of the motions generated by the three cams of Figure 2 as a function of degrees of revolution of the cam's input or drive member.

Fig. 5A      is an elevational view of a positive
             motion cam of the type employed as a
             master cam in the preferred embodiment.

Fig. 5B      is a perspective view of a double-
             profile cam of the type depicted in
             Fig. 5A.


DESCRIPTION OF THE PREFERRED EMBODIMENT

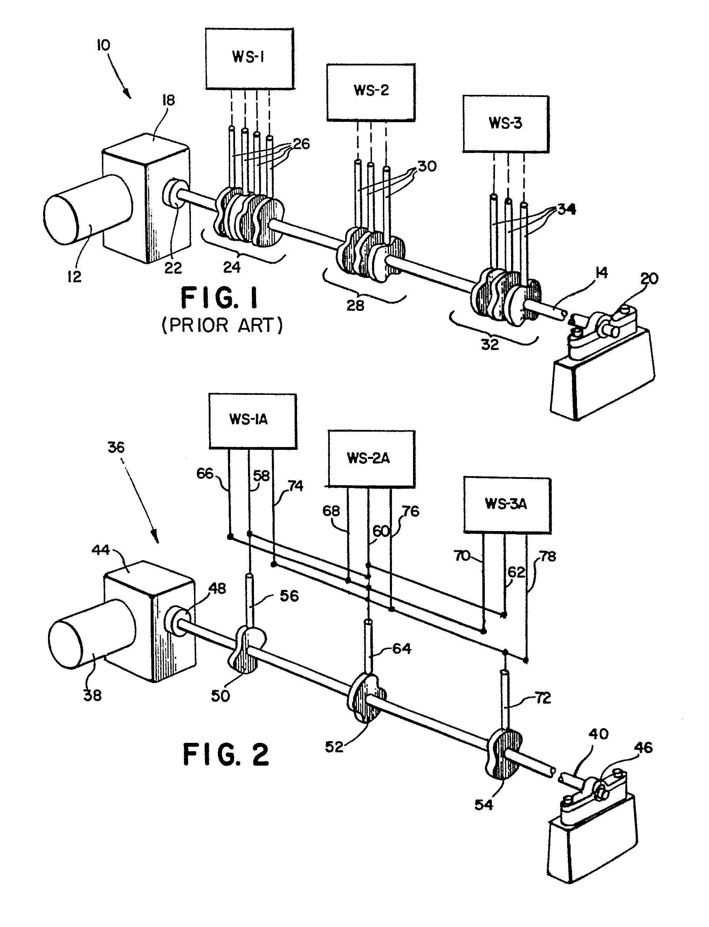

Referring now to the drawings and specifically to
Fig. 1, numeral 10 generally indicates a multi-
workstation assembly machine constructed in
accordance with the prior art.

In Fig. 1, an electric motor 12 drives cam shaft
14 through a transmission 18.  Cam shaft 14 is
journalled in bearings 20 and 22.  The cam shaft
14 has three groups 24, 28, 32 of cams fixedly
mounted thereon.  Cam group 24 includes four cams
which provide four different mechanical movements
to a first workstation WS-1 through cam followers
26.  Cam group 28 includes three cams which provide
three different mechanical movements to a second
workstation WS-2 through cam followers 30.  Cam
group 32 includes three cams which provide three
different mechanical movements to a third workstation
WS-3 through cam followers 34.

The cams in cam groups 24, 28 and 32 are located
in fairly close proximity to the workstations
WS-1, WS-2 and WS-3, respectively.  If additional
mechanical motions are required by a workstation further cams would be added to the respective cam groups. Adding further cams sometimes creates an incompatibility between the motions generated by the existing cams and the added cams which may require correction such as cutting a new key-way on one or more of the existing cams so they may be repositioned on the cam shaft. As more cams are added to any cam group, the size of the respective workstation and associated cam group increases. Such an increase in size increases the overall size of the assembly machine on which the workstations are mounted.

Turning now to the preferred embodiment of the present invention, in Fig. 2 a multi-workstation assembly machine 36 has been shown schematically. An electric motor 38 rotates a cam shaft 40 by way of a transmission 44. The cam shaft 40 is journalled at its ends in bearings 46 and 48. The cam shaft 40 has cams 50, 52 and 54 fixedly mounted thereon for rotation therewith. Cam 50 provides a first mechanical movement for first, second, and third workstations WS-1A, WS-2A, and WS-3A through a cam follower 56 by way of paths 58, 60 and 62. Cam 52 provides a second mechanical movement for workstations WS-1A, WS-2A, and WS-3A through cam follower 64 by way of paths 66, 68 and 70. Cam 54 provides a third mechanical movement for workstations WS-1A, WS-2A and WS-3A through cam follower 72 by way of paths 74, 76 and 78. The above-mentioned paths between the cam followers 56, 64 and 72 and the workstations WS-1A, WS-2A and WS-3A may comprise any number of conventional motion transmitting devices such as arms, linkages, couplings, and the like suitable for the motion transmitting task involved.

All the motions generated by the cams 50, 52 and 54 are used, to varying degrees, by every workstation of the assembly machine 36.

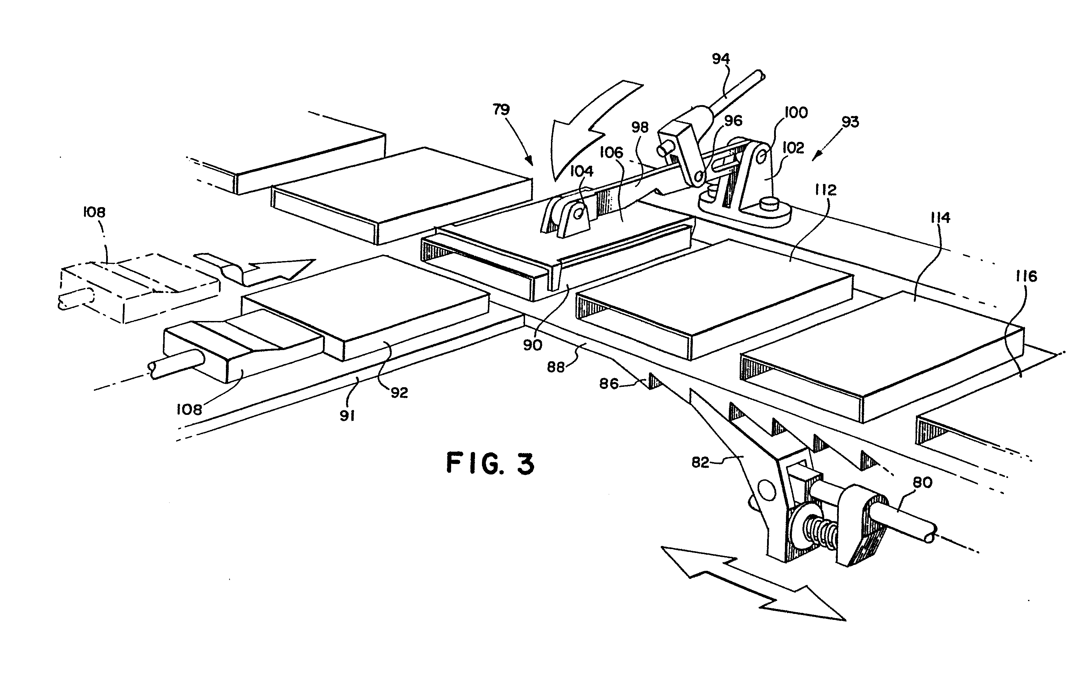

Fig. 3 depicts an example of such a workstation. The mechanical motion provided by cam 50 (Fig. 2) is transmitted to a shaft 80 and a spring loaded pawl 82. The pawl 82 engages a toothed rack 86 and the reciprocating motion of shaft 80 generated by the cam 50 moves a conveyor 88 with a container 90 positioned thereon into the workstation 79 position shown in Fig. 3. As the container 90 is being positioned to workstation 79 by the conveyor 88, a conveyor belt 91 positions a container insert 92 to the position shown in said Fig. 3 by another ratchet mechanism (not shown) which is also moved by the cam 50.

After the container 90 is positioned in the workstation 79, a hold-down clamp 93 is rotated to the position shown in Fig. 3 by the motion generated by cam 52 (Fig. 2). The clamp 93 engages and temporarily maintains the container 90 in a fixed position with respect to conveyor 88. The motion generated by the cam 52 is transmitted to a shaft 94. The shaft 94 is linked to an arm 98 by a pin 96, and the arm 98 is pivotally and slidably mounted by a pin 100 to a support bracket 102. The arm 98 is also pivotally mounted by a pin 104 to a brace plate 106. When the container 90 is in the position shown in Fig. 3, the brace plate 106 is pivoted into engagement with the container 90 by a motion generated by the cam 52 (Fig. 2) and transmitted to the shaft 94.

As the hold-down clamp 93 is moved to the position shown in Fig. 3 by the motion of the cam 52, the cam 52 is also used to move a ram 108 from the position shown in phantom to a position adjacent container insert 92, for subsequent movement of the insert 92 into the container 90 by the ram 108. The linkage that connects the cam 52 to ram 108 is of conventional design.

After the container 90, the container insert 92, and the hold-down clamp 93 are in the positions shown in Fig. 3 with the ram 108 adjacent container insert 92, the container insert 92 is pushed into container 90 by the ram 108. The ram movement for the purpose of pushing the insert 92 into the container 90 results from motions generated by the cam 54 which is coupled to the ram 108 by conventional coupling means (not shown). Further containers 112, 114, 116, are filled with container inserts as they are moved into the workstation 79 by the motions of the cam 50, are held in place as a result of the motions of cam 52, and are filled with a container insert as a result of the motion of cam 54.

The workstation 79 shown in Fig. 3 is representative of any one of the workstations WS-1A, WS-2A, and WS-3A. These workstations may operate in parallel, performing identical operations on three different work pieces, or they may perform different operations in sequence on one work piece moved through each of these stations. In case of such sequential operations the movements required within any group of movements generated by the respective cam may be calibrated to meet the requirements by well known mechanical linkages.

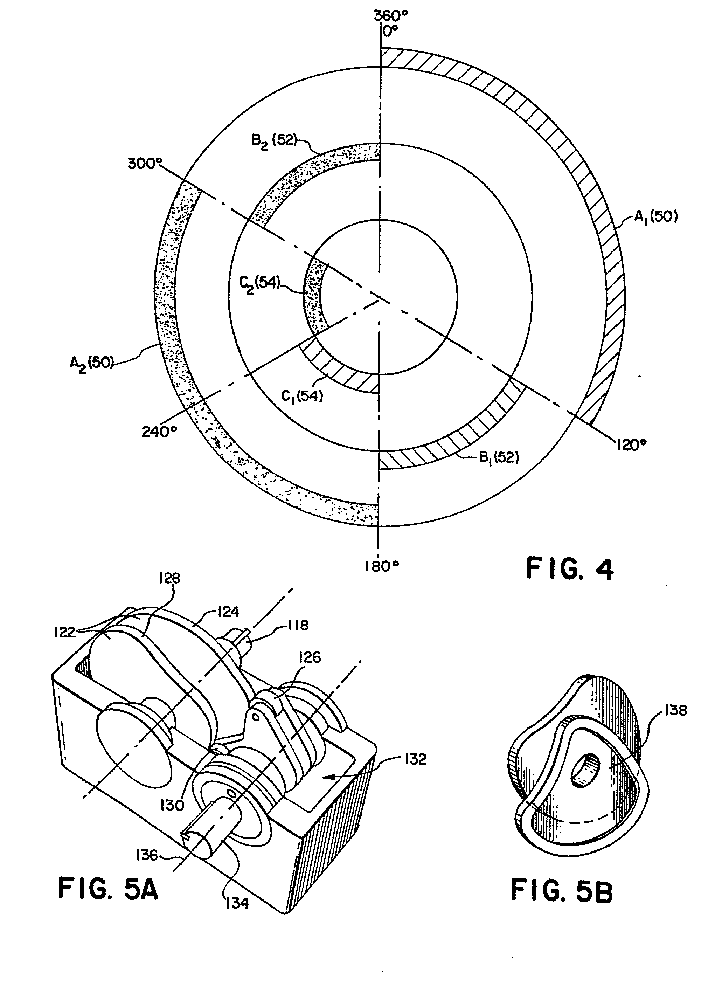

A graph of the movement of cams 50, 52, and 54 as a function of the angular rotation of their camshaft 40 is shown in Fig. 4. All of the movements generated by the cams 50, 52, and 54 occur serially within one revolution of the camshaft 40. $A_1/A_2$ represents movements of cam 50; $B_1/B_2$ represents movements of cam 52; and $C_1/C_2$ represents movements of cam 54. Movements $A_1$, $B_1$ and $C_1$ represent movements of the cams 50, 52, and 54 to move a workpiece, position a tool adjacent the workpiece and then actuate the tool to perform an operation on the workpiece as the cam followers of the cams move from an initial position. $A_2$, $B_2$ and $C_2$ represent return movements of the cams 50, 52, and 54, respectively, to said initial positions. The motions generated by the cam 50 are utilized between 0° and 120° of the rotation of the camshaft 40, the motions generated by the cam 52 are utilized between 120° and 180° of the rotation of the camshaft 40, and the motions generated by the cam 54 are utilized between 180° and 240° of the rotation of the camshaft 40. Cams 50, 52 and 54 and their cam followers 56, 64, and 72 return to their initial positions between 180° and 300°, between 300° and 360°, and between 240° and 300°, respectively.

0088843

-9-

Cams 50, 52 and 54 are of the positive motion type suited for heavy workloads incurred when each cam must provide movement to more than one workstation. Positive motion cams are more expensive than non-positive motion cams. However, the overall cost of positive motion cams in an assembly machine, for example, is substantially less than the cost of providing required workstations or movements by means of non-positive motion cams.

A positive motion cam of the type used in the preferred embodiment of the present invention is shown in Figs. 5A and 5B. In Fig. 5A, as camshaft 118 is rotated by drive means (not shown), a complementary or double profile cam 122, which is fixedly attached to the camshaft 118, rotates simultaneously therewith. As the camshaft 118 and the cam 122 rotate, a cam surface 124 engages a roller 126, or a cam surface 128 engages a roller 130, which are rotatably mounted on a cam follower 132, causing the follower 132 and an output shaft 134 affixed thereto, to rotate first in one direction and then in another direction about axis 136. As the camshaft 118 rotates through 180°, the output shaft 134 is rotated about axis 136 as cam surface 124 engages cam roller 126, from a first rest position to a second rest position through its entire range of either clockwise or counterclockwise movement. During the next 180° rotation of the camshaft 118, the cam face 128 engages the roller 130, causing the output shaft 134 to reverse direction and rotate from said second rest position backward to said first rest position. This sequence is repeated in an oscillatory manner for every subsequent 360° rotation of the double profile cam 122. Cam 138 in Fig. 5B is a more detailed view of a complementary or double profile cam of Fig. 5A.

## DISCUSSION

The assembly machine of the preferred embodiment utilizes three basic motions generated by the rotation of cams 50, 52 and 54 to move a workpiece between a series of workstations and to assemble portions of the workpiece at the workstations. This is accomplished, in part, by grouping all of the motions needed to perform the assembly operation into one of three possible groups and by having one cam provide all of the required movements for one group. In the preferred embodiment, the three groups are: (1) movement of the workpiece into a workstation; (2) movement of a tool to a position where it can perform an operation on the workpiece; and (3) a movement that actuates the tool to perform an operation on said workpiece. Other assembly machines may require more or fewer groups with a correspondingly greater or smaller number of motion-generating cams.

In prior art arrangements, a plurality of cams is present at each workstation of assembly machines. These cams and their mechanical linkages, couplings, arms, etc. required to transfer the motions generated to their associated workstations require a significantly larger space than an arrangement employing the concept of the present invention. In the preferred embodiment the cams are centrally located remote from the assembly machine workstations, and only three sets of linkages are utilized for transferring the cam motions to a particular workstation. The space required for cams, linkages, etc. is thus reduced significantly.

In the design of apparatus that utilizes a plurality of workstations to perform a series of operations on a product or workpiece, it is often necessary to reposition a cam on its camshaft because of the interference between motions generated by cams that are already positioned on a camshaft, with the motions generated by a cam that is subsequently added to the same camshaft. In the present invention, the position of all cams are permanently set or fixed at the outset and this forces the apparatus designer to obtain all of the required motions from these preset cams which makes it unnecessary to reposition an already positioned cam.

Claims:

1. Apparatus for performing a plurality of
operations on workpieces by cam-driven devices
provided in a plurality of workstations,
characterized by the fact that the devices
(82; 91; 93; 108) are arranged in separate
groups, each group comprising a device
(82, 91; 93; 108) in one workstation (79;
WS-1A; WS-2A; WS-3A) and at least one other
device in another workstation, and that there
is provided one cam (50; 52; 54) for each group.

2. Apparatus in accordance with claim 1,
characterized by the fact, that the cams
(50, 52, 54) for all groups are mounted on
a common drive shaft (40).

3. Apparatus in accordance with claim 1 or 2,
characterized by the fact that at least one
device (82; 91) at at least one workstation (79)
comprises means for conveying a workpiece
(90, 92) into a position at which an operation
can be performed in respect of the workpiece.

4. Apparatus in accordance with any one of
claims 1 to 3, characterized by the fact that
the device (82, 88) at at least one workstation
(WS-1A; WS-2A; WS-3A) comprises means for
conveying a workpiece (90) from one workstation
to another.

5. Apparatus in accordance with any one of
claims 1 to 4, characterized by the fact that one device (93) in each workstation (79) comprises means for retaining a workpiece in a position at which an operation can be performed in respect of the workpiece.

6. Apparatus in accordance with any one of claims 1 to 5, characterized by the fact that each workstation (WS-1A; WS-2A; WS-3A) is provided with a device (108) comprising a tool for performing an operation on a workpiece (90; 92).

7. Apparatus in accordance with any one of claims 1 to 6, characterized by the fact that the cams (50, 52, 54) are double profile cams.

8. Apparatus in accordance with claim 2, characterized by the fact that the shaft (40) is connected to an electric motor (38).

0088843

1/3

FIG. 1
(PRIOR ART)

FIG. 2

FIG. 3

FIG. 4

FIG. 5A

FIG. 5B

European Patent Office

# DOCUMENTS CONSIDERED TO BE RELEVANT

EP 82301352.9

| Category | Citation of document with indication, where appropriate, of relevant passages | Relevant to claim | CLASSIFICATION OF THE APPLICATION (Int. Cl. ³) |
|---|---|---|---|
| X | US - A - 4 184 236 (NUTT)<br>* Column 3, lines 1-5 *<br>-- | 1,2,8 | B 23 P 19/04<br>B 23 P 21/00 |
| A | US - A - 4 202 435 (MANG)<br>* Totality *<br>-- | 1,8 | |
| A | US - A - 4 292 734 (SWANSON)<br>* Totality *<br>-- | 1 | |
| A | US - A - 4 313 260 (YEO)<br>* Totality *<br>---- | 1 | |

TECHNICAL FIELDS SEARCHED (Int. Cl. ³)

B 23 P 19/00
B 23 P 21/00
B 23 Q 7/00

The present search report has been drawn up for all claims

| Place of search | Date of completion of the search | Examiner |
|---|---|---|
| VIENNA | 16-05-1983 | KREHAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82